# EUROPÄISCHE PATENTSCHRIFT

(11) **EP 1 325 221 B1**
(45) Veröffentlichungstag und Bekanntmachung des Hinweises auf die Patenterteilung: **30.11.2016**
(21) Anmeldenummer: 01958015.8
(22) Anmeldetag: 24.07.2001
(51) Int. Cl.: F02D 35/02, F02D 41/40, F02D 37/00, F02D 41/26

(54) **VERFAHREN ZUM STEUERN BZW. REGELN DES VERHALTENS EINES VERBRENNUNGSMOTORS**
METHOD FOR CONTROLLING OR REGULATING THE BEHAVIOUR OF AN INTERNAL COMBUSTION ENGINE
PROCEDE POUR COMMANDER OU REGULER LE COMPORTEMENT D'UN MOTEUR A COMBUSTION

(30) Priorität: 27.09.2000 DE 10047813
(43) Veröffentlichungstag der Anmeldung: 09.07.2003
(73) Patentinhaber: Volkswagen Aktiengesellschaft, 38440 Wolfsburg (DE)
(72) Erfinder: JESCHKE, Jens, 38106 Braunschweig (DE); GLOGER, Jürgen, 38518 Gifhorn (DE); NITZKE, Hans-Georg, 38547 Wettmershagen (DE)
(74) Vertreter: Banzer, Hans-Jörg
(86) Internationale Anmeldenummer: PCT/EP2001/008565
(87) Internationale Veröffentlichungsnummer: WO 2002/027171

(56) Entgegenhaltungen:
- DE-A- 19 749 814
- DE-A- 19 757 875
- US-A- 4 337 513
- US-A- 4 624 229

## Beschreibung

Die vorliegende Erfindung betrifft ein Verfahren zum Steuern bzw. Regeln des Verhaltens eines Verbrennungsmotors nach dem Oberbegriff des Anspruches 1.

Zum Steuern bzw. Regeln des Verhaltens eines Verbrennungsmotors sind verschiedene Ansätze bekannt. So haben neuere Studien gezeigt, dass insbesondere im Bereich von OttoMotoren eine Ionenstrommessung im Verbrennungsraum (Zylinder) des Motors durchgeführt werden kann, um den Druck im Verbrennungsraum (Zylinderdruck) und das lokale Lambda bestimmen und somit die Zündung in dem Motor überwachen zu können. Das lokale Lambda gibt Auskunkt über das Luft-Kraftstoff-Verhältnis an einem bestimmten lokalen Punkt im Verbrennungsraum.

Bezüglich dieses Ansatzes ist in der DE-196 05 801 A1 ein Ionenstrom-Messsystem für einen Verbrennungsraum eines Otto-Motors beschrieben, wobei die für den Verbrennungsraum vorgesehene Zündkerze zugleich als Ionenstrom-Messsensor verwendet wird. Das auf diese Weise gewonnene Ionenstromsignal kann gemäß dieser Druckschrift dazu benutzt werden, um das sogenannte Klopfen des entsprechenden Motors zu detektieren und über eine geeignete Steuerung des Zündzeitpunkts eine entsprechende Klopfregelung aufzubauen. Zudem wird in dieser Druckschrift vorgeschlagen, das Ionenstromsignal zur Erkennung von Zündaussetzern oder zur Erkennung der Nockenwellenstellung zu verwenden.

Darüberhinaus ist auch die Verwendung von sogenannten Nadelbewegungsfühlern oder Zylinderdrucksensoren zum Überwachen des Verbrennungsablaufs in einem Verbrennungsmotor bekannt. Mit Hilfe eines in der Einspritzdüse eines Brennraums eines Verbrennungsmotors angeordneten Nadelbewegungsfühlers kann der genaue Einspritzbeginn erfasst werden. Die Nachteile eines derartigen Nadelbewegungsfühlers sind jedoch seine relativ hohen Kosten und seine relative große Komplexität. Zudem ist nachteilig, dass mit Hilfe eines Nadelbewegungsfühlers lediglich der Start einer Einspritzung und nicht der Start einer Verbrennung detektiert werden kann.

Mit Hilfe eines Zylinderdrucksensors kann hingegen der Brennraumdruck in einem entsprechenden Verbrennungsraum erfasst und davon abhängig auf verschiedene Verbrennungsparameter geschlossen werden. So ist beispielsweise in der DE 197 49 814 A1 ein Verfahren nach dem Oberbegriff des Anspruches 1 beschrieben, wobei in jeden Zylinder eines Verbrennungsmotors ein Brennraumdrucksensor eingesetzt ist. Der von dem jeweiligen Brennraumdrucksensor gelieferte Druckverlauf wird mit einem Soll-Druckverlauf verglichen, um davon abhängig den Betrieb des Verbrennungsmotors regeln zu können. Dabei wird in dieser Druckschrift insbesondere beschrieben, das sogenannte Differenzdrucksignal zu ermitteln. Hierzu wird zunächst die Differenz zwischen dem im gefeuerten Betrieb, d.h. im Verbrennungsbetrieb, gemessenen Brennraum-Druckverlauf und dem im geschleppten Betrieb, d.h. ohne Verbrennung, auftretenden Brennraum-Druckverlauf ermittelt und diese Differenz aufintegriert. Durch Auswertung dieses Differenzdruckintegrals kann dann mit Hilfe eines geeigneten Motorsteuergeräts auf den Betriebszustand des Verbrennungsmotors geschlossen werden, wobei das Motorsteuergerät davon abhängig Steuersignale an verschiedene Komponenten des Verbrennungsmotors, beispielsweise Einspritzsignale, abgibt, um das Verhalten des Verbrennungsmotors entsprechend beeinflussen zu können. Die DE 197 57 875 A, auf welcher der Oberbegriff des Anspruchs 1 basiert, offenbart ein Verfahren zum Betreiben einer Brennkraftmaschine mittels eines Steuergeräts, bei welchem eine Anzahl von Funktionen in zeitlichen Abständen und/oder in Abhängigkeit von der Drehzahl der Brennkraftmaschine durchgeführt werden. Bei dem Verfahren nach der DE 197 57 875 A werden eine die Auslastung des Steuergeräts darstellende Größe und eine die Drehzahl der Brennkraftmaschine darstellende Größe ermittelt, wobei die Anzahl der durchgeführten Funktionen vermindert wird, wenn die die Auslastung darstellende Größe größer ist als ein bestimmter Schwellenwert, und/oder der zeitliche Abstand der Durchführung der Funktionen in Abhängigkeit von der die Drehzahl darstellenden Größe oder der die Auslastung darstellenden Größe erhöht wird. Insbesondere kann dabei die Anzahl von Funktionen in Klassen mit verschiedenen Prioritäten eingeteilt werden, wobei die Funktionen mit der niedersten Priorität nicht durchgeführt werden, wenn die die Auslastung darstellende Größe größer ist als der Auslastungsschwellenwert. Somit können Funktionen gemäß ihren Prioritäten stufenweise abgeschaltet werden.

Das US-Patent Nr. 4,624,229 offenbart eine Verbrennungssteuerung für einen Verbrennungsmotor, welche auf einen Brennkammerdruck ansprechende Mittel umfasst, um Signale zu erzeugen, die einen Verbrennungsdruck und einen Schleppdruck bei vorherbestimmten Drehwinkeln einer Kurbelwelle anzeigen. Basierend auf den Signalen wird eine Verdünnungsströmung eingestellt, um ein Druckverhältnis auf einem vorherbestimmten Niveau aufrechtzuerhalten.

Die EP 0 221 386 A2 beschreibt Verfahren und Einrichtungen zur Adaption der Gemischsteuerung bei Brennkraftmaschinen. Dabei wird ein Kennfeld eingesetzt. Die von dem Kennfeld ausgegebene Vorsteuergröße wird durch mindestens eine adaptiv veränderbare Korrekturgröße beeinflusst.

Die GB 2 331 155 A beschreibt eine Einspritzregelung abhängig von einem Druck einer Brennkammer.

Gemäß dem herkömmlichen Stand der Technik kommt häufig eine sogenannte kennfeldbasierte Regelung der Verbrennungsmotoren zur Anwendung. Dabei sind die eingesetzten Regler oft einfach strukturiert, und die Sollwerte für die Regler werden in Kennfeldern, welche durch Offline-Versuche ermittelt werden, definiert. Durch unterlagerte Regelkreise können die Kennfelder an verschiedene Betriebszustände angepasst werden (beispielsweise Rauchbegrenzung, Leerlauf, Laufruhe, Motorstart etc.).

Der vorliegenden Erfindung liegt die Aufgabe zugrunde, ein Verfahren zum Steuern bzw. Regeln des Verhaltens eines Verbrennungsmotors vorzuschlagen, wobei insbesondere der Regelungskomfort verbessert und die Motorapplikation vereinfacht ist.

Diese Aufgabe wird erfindungsgemäß durch ein Verfahren nach den Merkmalen des Anspruches 1 und eine Vorrichtung nach Anspruch 5 gelöst. Die Unteransprüche definieren bevorzugte und vorteilhafte Ausführungsformen der vorliegenden Erfindung.

Erfindungsgemäß erfolgt die Steuerung bzw. Regelung des Verhaltens eines Verbrennungsmotors, beispielsweise Dieselmotors, in verschiedenen hierarchisierten Entscheidungsebenen. Die Entscheidungsebenen unterscheiden sich in der Dauer ihrer Überwachungszeiten, in denen die Verbrennung des Verbrennungsmotors überwacht wird, ehe ein neuer Eingriff zur Beeinflussung des Verhaltens des Verbrennungsmotors erfolgt, und/oder in der Dauer ihrer Reaktionszeiten, mit denen auf einen veränderten Verbrennungszustand des Verbrennungsmotors reagiert wird. So kann insbesondere die Einspritzung des Verbrennungsmotors zylinderindividuell schnell geregelt werden, während die Gasdynamik des Verbrennungsmotors langsamer adaptiert wird. Noch langsamer, d.h. mit einem noch größeren Beobachtungszeitfenster, kann die Beeinflussung der Motordynamik in Form einer Lastpunktwechselführung erfolgen. Die höchste Entscheidungs- oder Hierarchieebenen können Diagnosefunktionen annehmen, die einen sehr langen Zeithorizont besitzen.

Die vorliegende Erfindung beruht auf der Erkenntnis, dass die von dem Motormanagement zu erfüllenden komplexen Aufgaben in der Regel verschiedene Zeithorizonte betreffen. Die Stellgrößen für das primäre Regelverhalten, insbesondere zur Beeinflussung des Förderbeginns oder der Fördermenge des Kraftstoffes oder zur Beeinflussung des Ladedruckstellers und der Abgasrückführung, werden in bestimmten Zeitintervallen verändert, so dass die von den entsprechenden Sensoren gelieferten Sensorwerte auch in einem solchen Zeitintervall verwertet werden. Diagnosefunktionen besitzen dagegen einen deutlich längeren Zeithorizont, die verwerteten Informationen sind daher viel stärker komprimiert.

Um die Betriebssicherheit des Motormanagements zu gewährleisten, wird es derart hierarchisiert, dass jederzeit die notwendigen Eingriffe mit einer garantierten Ansprechzeit ("guaranteed response time") erfolgen können. Eine optimale Führung des Motormanagements stützt sich jedoch auf Informationen, die längere Zeiträume betrachten. Ähnlich der Reaktion von Menschen auf neue Situationen wird daher zwischen Reflexentscheidungen bzw. optimalen Entscheidungen unterschieden.

Eingriffe in der Echtzeitebene verlangen kurze Entscheidungs- und Ausführungszeiten. Diese Entscheidungsebene entspricht im Prinzip der Regelungsebene, welche sich auf elementare Sensoren (beispielsweise zur Erfassung des Ladedrucks, der Temperatur, der Drehzahl usw.) stützt, um den Gesamtprozess zu stabilisieren und zu regeln. Weitergehende Informationen über den Gesamtprozess können hierbei nicht gemessen werden, sondern müssen in irgendeiner Form offline, beispielsweise in Form von Kennfeldern, ermittelt und komprimiert werden. Weicht der Prozess jedoch beispielsweise durch Alterung oder Abnutzung von dem offline ermittelten Zustand ab, werden die Eingriffe schlechter auf den Prozess abgestimmt sein, da die in den Kennfeldern abgelegten Daten oder Sollwerte nicht mehr dem augenblicklichen Zustand des Verbrennungsmotors entsprechen. Um diese Abweichungen tolerierbar zu halten, werden die offline ermittelten Informationen vorzugsweise mit einem relativ breiten Abstand von der optimalen Strategie entfernt sein. Die Beobachtung des Verbrennungsmotors über einen längeren Zeitraum erlaubt das Erkennen von diesen Abweichungen (Diagnose) und das Nachführen des Verbrennungsmotors auf die geänderten Prozessbedingungen.

Insgesamt wird mit Hilfe der vorliegenden Erfindung eine eindeutige hierarchische Motormanagement-Struktur vorgeschlages, mit der eine vereinfachte Motorapplikation, insbesondere an den Toleranzgrenzen, möglich ist. Des weiteren werden der Komfort, die Emissionen, der Kraftstoffverbrauch und die Motordiagnose verbessert.

Die vorliegende Erfindung wird nachfolgend unter Bezugnahme auf die beigefügte Zeichnung anhand eines bevorzugten Ausführungsbeispiels näher erläutert.
Figur 1 zeigt ein vereinfachtes Blockschaltbild eines Motormanagement-Systems, bei dem das erfindungsgemäße Verfahren zum Einsatz kommen kann,
Figur 2 zeigt eine beispielhafte Struktur für die Motorregelung eines Dieselmotors gemäß einem bevorzugten Ausführungsbeispiel der vorliegenden Erfindung, und
Figur 3 zeigt ein Motormanagement-System zur Regelung der Einspritzung eines Verbrennungsmotors, bei dem das erfindungsgemäße Verfahren zur Anwendung kommen kann.

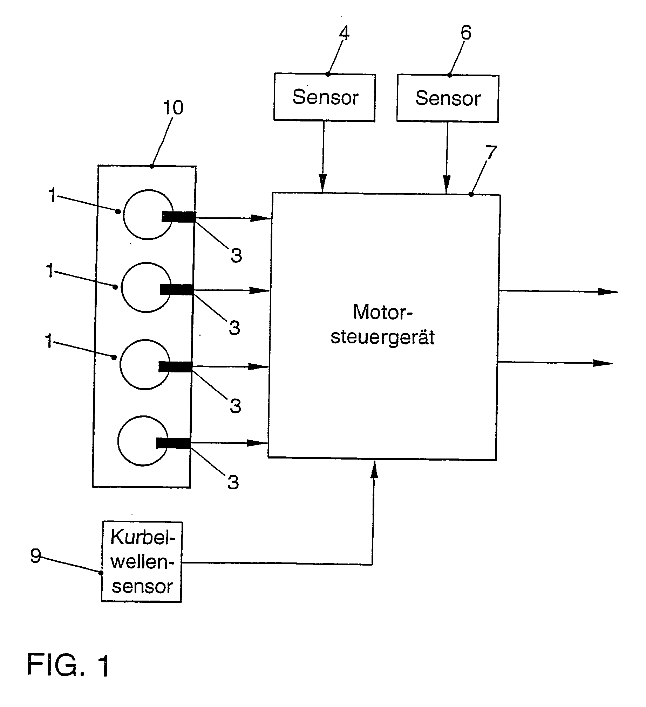

In Figur 1 ist ein Verbrennungsmotor 10, beispielsweise ein Dieselmotor, dargestellt, dessen Verhalten von einem Motorsteuergerät 7 gesteuert bzw. geregelt wird. Insbesondere wird bei dem in Figur 1 gezeigten Ausführungsbeispiel der Verbrennungsablauf in jedem einzelnen Zylinder 1 des Verbrennungsmotors 10 überwacht bzw. erfasst und davon abhängig das Verhalten des Verbrennungsmotors 10 gesteuert bzw. geregelt. Zu diesem Zweck sind in den einzelnen Zylindern 1 des Verbrennungsmotors 10 Zylinderdrucksensoren 3 angeordnet, welche im wesentlichen druckproportionale Ausgangssignale erzeugen und dem Motorsteuergerät 7 zuführen. Daneben ist ein Kurbelwellensensor 9 vorgesehen, der ein dem augenblicklichen Kurbelwellenwinkel des Verbrennungsmotors 10 entsprechendes Ausganssignal erzeugt und dem Motorsteuergerät 7 zuführt. Wie in Figur 1 gezeigt ist, können dem Motorsteuergerät 7 auch die Ausgangssignale weiterer Sensoren 4, 6 zugeführt werden. Bei den Sensoren 4, 6 kann es sich beispielsweise um einen Temperatursensor, einen Lastsensor etc. handeln.

Das Motorsteuergerät 7 wertet die ihm zugeführten Ausgangssignale der einzelnen Sensoren 3, 4, 6 und 9 aus und erzeugt davon abhängig Stellsignale für verschiedene Komponenten des Verbrennungsmotors, um somit beispielsweise den Einspritzzeitpunkt, die Einspritzdauer oder die Einspritzmenge des dem jeweiligen Zylinder 1 des Verbrennungsmotors 10 zugeführten Kraftstoffes in Abhängigkeit von dem Zylinderdruckverlauf in dem jeweiligen Zylinder 1 einzustellen.

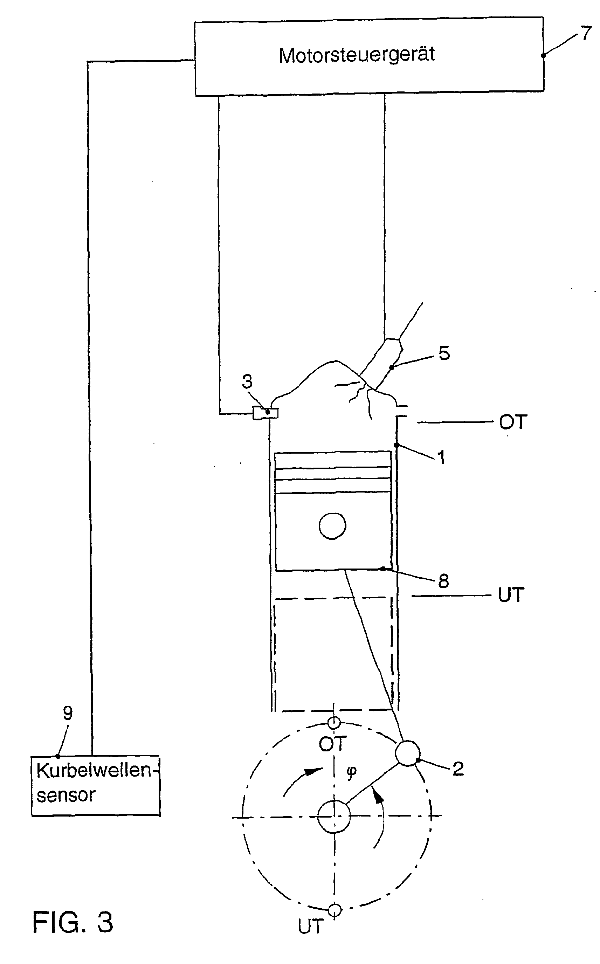

Ein weiteres Ausführungsbeispiel für ein erfindungsgemäßes Motormanagement-System ist in Figur 3 dargestellt. In Figur 3 ist ein Zylinder bzw. das entsprechende Zylindergehäuse 1 eines Verbrennungsmotors, beispielsweise eines Dieselmotors, dargestellt. Ein in dem Zylinder 1 befindlicher Kolben 8 wird über eine Kurbelwelle 2 des Verbrennungsmotors angetrieben. Wird beispielsweise angenommen, dass der Verbrennungsmotor mit vier Takten arbeitet, erreichen die Kurbelwelle 2 und der Kolben 8 innerhalb eines Arbeitszyklusses genau zwei Mal den oberen Totpunkt OT und den unteren Totpunkt UT, was zwei vollständigen Umdrehungen der Kurbelwelle 2 entspricht. In der Kraftfahrzeugtechnik werden die Drehwinkel ϕ der Kurbelwelle in Grad Kurbelwellenwinkel (°KW) angegeben.

Bei dem dargestellten Ausführungsbeispiel ist im Bereich des Zylinderkopfs oder der Zylinderkopfdichtung ein Zylinderdrucksensor 3 angeordnet, mit dessen Hilfe der in dem Zylinder 1 während des Betriebs der Verbrennungsmotors auftretende Zylinderdruck erfasst werden kann. Der auf diese Weise erfasste und in dem Zylinder 1 herrschende Zylinderdruck wird zu der augenblicklichen Stellung der Kurbelwelle 2, d.h. zu dem augenblicklichen Drehwinkel ϕ der Kurbelwelle, in Beziehung gesetzt. Zu diesem Zweck ist ein Kurbelwellensensor 9 vorgesehen, welcher kontinuierlich die augenblickliche Stellung der Kurbelwelle 2 erfasst und diese dem Motorsteuergerät 7 zuführt. Auf diese Weise kann das Motorsteuergerät 7 den Verlauf des Zylinderdrucks in Abhängigkeit von dem Drehwinkel ϕ der Kurbelwelle 2 ermitteln.

Das Motorsteuergerät 7 ist derart ausgestaltet, dass es anhand des somit erfassten Zylinderdruckverlaufs Rückschlüsse auf den in dem Zylinder 1 ablaufenden Verbrennungsvorgang schließen kann. Das Motorsteuergerät 7 erzeugt in Abhängigkeit von dem somit erfassten Verbrennungsablauf gemäß einem bestimmten Regelungs- bzw. Steuerungsalgorithmus Stellsignale, um das Verhalten des Verbrennungsmotors entsprechend zu beeinflussen. Bei dem in Figur 3 gezeigten Ausführungsbeispiel wird hierzu insbesondere auf den Einspritzverlauf Einfluss genommen. In Figur 3 ist ein mit einer entsprechenden Kraftstoffleitung gekoppeltes Einspritzventil 5 dargestellt, über welches in den Zylinder 1 ein bestimmter Kraftstoff eingespritzt wird. Durch die Ansteuerung dieses Einspritzventils 5 kann die Fördermenge und/oder der Förderzeitpunkt (Förderbeginn und Förderdauer) des in den Zylinder 1 eingespritzten Kraftstoffs eingestellt werden.

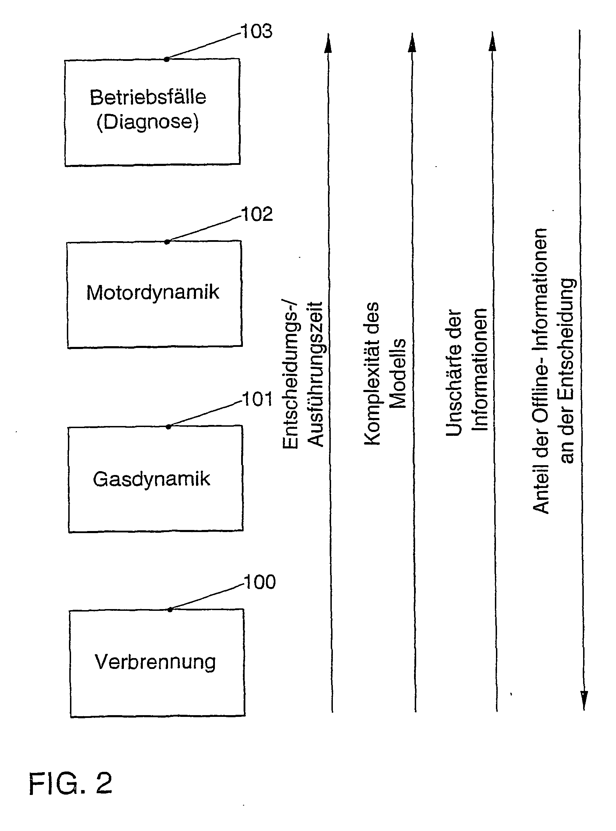

Bei der Steuerung bzw. Regelung des Verbrennungsmotors 10 durch das Motorsteuergerät 7 kommt eine Motormanagement-Strategie zur Anwendung, die nachfolgend näher anhand Figur 2 erläutert werden soll.

Die Motormanagement-Strategie sieht die Überwachung des Verbrennungsablaufs in jedem einzelnen Zylinder des Verbrennungsmotors vor, um daraus Merkmale für bestimmte Zielgrößen, beispielsweise für die Kraftstoffemission oder das Drehmoment, abzuleiten. Aus den somit erfassten Merkmalen der Verbrennung werden Stellgrößen abgeleitet, wobei Modelle für die dynamische Übertragung der Stellgrößen auf die Verbrennung benutzt und Optimierungskriterien für die Zielgröße definiert werden. Die einzelnen verwendeten Modelle werden jeweils an ein geändertes Betriebsverhalten des Verbrennungsmotors angepasst, d.h. adaptiert.

Gemäß der erfindungsgemäßen Motormanagement-Strategie kommt eine hierarchische Struktur von mehreren Entscheidungsstufen 100 - 103 zur Anwendung, die sich im wesentlichen in ihren Überwachungs- oder Beobachtungszeiten, ihren Entscheidungszeiten und/oder ihren Ausführungszeiten unterscheiden. D.h. in den einzelnen Entscheidungsebenen 100 - 103 wird das Verhalten des Verbrennungsmotors unterschiedlich lange beobachtet, bis ein neues Stellsignal für eine entsprechende Beeinflussung des Verhaltens des Verbrennungsmotors erzeugt wird, und/oder in den einzelnen Entscheidungsebenen 100 - 103 wird unterschiedlich schnell auf ein verändertes Betriebsverhalten des Verbrennungsmotors reagiert.

Die unterste Entscheidungsebene 100 entspricht im Prinzip der Regelungsebene. Hier erfolgt eine sehr schnelle Regelung, um beispielsweise einen bestimmten Drehmomentwert oder Schadstoffemissionswert zu erzielen. Zu diesem Zweck kann beispielsweise der Förderbeginn und/oder die Fördermenge des Kraftstoffs entsprechend eingestellt werden. In der Entscheidungsebene 100 sind somit sehr kurze Entscheidungs- und Ausführungszeiten gefordert. Die in dieser Entscheidungsebene 100 getroffenen Entscheidungen stützen sich im wesentlichen auf elementare Sensoren. Weitergehende Informationen können hier nicht gemessen werden, sondern müssen in irgendeiner Form offline ermittelt und komprimiert werden, wobei sich hierzu insbesondere die Verwendung von Kennfeldern anbietet. Der Anteil an den somit vorgegebenen Offline-Informationen ist in der untersten Entscheidungsebene 100 relativ hoch. Diese sehr schnelle Entscheidungsebene 100 eignet sich vorzugsweise dazu, um die in den einzelnen Zylindern auftretende Verbrennung zu erfassen, auszuwerten und entsprechend auf das Verhalten des Verbrennungsmotors einzuwirken.

In den beiden nächsthöheren Entscheidungsebenen 101 und 102 wird ein etwas längerer Zeithorizont als in der untersten Entscheidungsebene 100 verwendet, d.h. die Entscheidungs- und Ausführungszeiten sind etwas länger. Da jedoch in diesen Entscheidungsebenen weniger schnell auf ein verändertes Verhalten des Verbrennungsmotors reagiert wird, sind die bei der Entscheidungsfindung verwendeten Informationen weniger genau als in der untersten Entscheidungsebene 100. Dagegen wird ein geringerer Anteil an Offline-Informationen für die Entscheidungsfindung benötigt, wobei jedoch die Komplexität des in diesen Entscheidungsebenen 101 und 102 verwendeten Entscheidungsmodell gegenüber der Entscheidungsebene 100 zunimmt.

In der Entscheidungsebene 101 kann die Gasdynamik des Verbrennungsmotors angepasst werden, was durch entsprechende Beeinflussung der Abgasrückführung und/oder des Ladedruckstellers der Verbrennungsmotors geschehen kann.

In der übergeordneten Entscheidungsebene 102 kann die Motordynamik mit einer entsprechenden Lastpunktwechselführung angepasst werden, was ebenfalls über die Abgasrückführung und/oder den Ladedrucksteller erfolgen kann.

Die oberste Entscheidungsebene 103 besitzt den längsten Zeithorizont, d.h. die Überwachungs-, Entscheidungs- und Ausführungszeiten sind deutlich länger als in den unteren Entscheidungsebenen 100 - 102. In dieser Entscheidungsebene 103 ist eine optimale Führung des Motormanagement-Systems möglich, da die Entscheidung auf über längere Zeiträume betrachtete Informationen gestützt werden kann. Der Anteil von Offline-Informationen, beispielsweise in Form von Kennfeldern, ist in dieser Entscheidungsebene 103 äußerst gering. Die Entscheidungsebene 103 eignet sich somit insbesondere zu Diagnosezwecken, um durch Beobachtung des Verhaltens des Verbrennungsmotors über einen längeren Zeitraum durch Alterung oder Abnutzung bedingte Abweichungen zu erfassen und den Verbrennungsmotor unter Berücksichtigung der geänderten Prozessbedingungen entsprechend nachzuführen. Des weiteren eignet sich diese Entscheidungsebene 103 zur Regelung ganzer Betriebsfälle, wie beispielsweise der Betriebsfälle "Motorstart" oder "Leerlauf". Ebenso kann die Entscheidungsebene 103 z.B. für die Regelung bzw. Steuerung des Verhaltens des Verbrennungsmotors verantwortlich sein, wenn das von dem Pedalwertgeber des entsprechenden Kraftfahrzeugs gelieferte Ausgangssignal einen großen Sprung aufweist.

### Bezugszeichenliste

- 1: Zylinder
- 2: Kurbelwelle
- 3: Zylinderdrucksensor
- 4, 6: sonstiger Sensor
- 5: Einspritzventil
- 7: Motorsteuergerät
- 8: Kolben
- 9: Kurbelwellensensor
- 10: Verbrennungsmotor
- OT: Oberer Totpunkt
- UT: Unterer Totpunkt
- ϕ: Kurbelwellenwinkel
- 100-103: Entscheidungsstufe

## Patentansprüche

1. Verfahren zum Steuern bzw. Regeln des Verhaltens eines Verbrennungsmotors,
wobei der Verbrennungsablauf innerhalb des Verbrennungsmotors (10) überwacht und ausgewertet wird, und
wobei anhand des Verbrennungsablaufs Stellsignale zur Beeinflussung des Verhaltens des Verbrennungsmotors (10) erzeugt werden,
wobei die Stellsignale zur Beeinflussung des Verhaltens des Verbrennungsmotors (10) in verschiedenen Entscheidungsebenen (100 - 103) erzeugt werden, welche sich hinsichtlich der Dauer ihrer Überwachungszeiten, in denen die Verbrennung des Verbrennungsmotors (10) überwacht wird, ehe mindestens ein neues Stellsignal erzeugt wird, und/oder der Dauer ihrer Reaktionszeiten, mit denen in Form mindestens eines entsprechenden Stellsignals auf einen veränderten Verbrennungszustand des Verbrennungsmotors (10) reagiert wird, unterscheiden,
**dadurch gekennzeichnet ,**
**dass** in den einzelnen Entscheidungsebenen (100 - 103) die Stellsignale durch Zugriff auf vor dem Betrieb des Verbrennungsmotors (10) vorgegebene Informationen, insbesondere in Form von Kennfeldern, erzeugt werden, wobei der Anteil dieser Informationen an der Erzeugung der Stellsignale mit abnehmender Überwachungszeit bzw. Reaktionszeit der Entscheidungsebenen (100 - 103) zunimmt, so dass der Anteil dieser Informationen an der Erzeugung der Stellsignale für eine Entscheidungsebene mit kürzerer Überwachungszeit bzw. Reaktionszeit größer ist als für eine Entscheidungsebene mit längerer Überwachungszeit bzw. Reaktionszeit,
wobei in einer Entscheidungsebene (103), welche die längste Überwachungszeit bzw. Reaktionszeit aufweist, eine Diagnose des Verbrennungsmotors (10) durchgeführt wird, um durch Beobachtung des Verhaltens des Verbrennungsmotors über einen längeren Zeitraum durch Alterung und Abnutzung bedingte Abweichungen zu erfassen und den Verbrennungsmotor (10) unter Berücksichtigung der geänderten Prozessbedingungen entsprechend nachzuführen.

2. Verfahren nach Anspruch 1,
**dadurch gekennzeichnet,**
**dass** der Verbrennungsablauf innerhalb des Verbrennungsmotors (10) durch Erfassung des in mindestens einem Zylinder (1) des Verbrennungsmotors (10) auftretenden Zylinderdrucks erfasst wird.

3. Verfahren nach Anspruch 2,
**dadurch gekennzeichnet,**
**dass** der Verbrennungsablauf innerhalb des Verbrennungsmotors (10) durch zylinderindividuelle Erfassung des in den einzelnen Zylindern (1) des Verbrennungsmotors (10) auftretenden Zylinderdrucks überwacht und ausgewertet wird.

4. Verfahren nach einem der vorhergehenden Ansprüche,
**dadurch gekennzeichnet,**
**dass** in einer ersten Entscheidungsebene (100) eine zeitlich schnelle Steuerung bzw. Regelung der Einspritzung eines Kraftstoffs in den Verbrennungsmotor (10) durchgeführt wird.

5. Vorrichtung zum Steuern bzw. Regeln des Verhaltens eines Verbrennungsmotors,
**dadurch gekennzeichnet,**
**dass** die Vorrichtung zur Durchführung aller Schritte eines Verfahrens nach einem der Ansprüche 1-4 eingerichtet ist.

## Claims

1. Method for performing open-loop or closed-loop control of the behaviour of an internal combustion engine,
wherein the combustion sequence within the internal combustion engine (10) is monitored and evaluated, and wherein actuation signals for influencing the behaviour of the internal combustion engine (10) are generated on the basis of the combustion sequence, and
wherein the actuation signals for influencing the behaviour of the internal combustion engine (10) are generated in different decision levels (100-103) which differ in terms of the duration of their monitoring times in which the combustion of the internal combustion engine (10) is monitored before at least one new actuation signal is generated, and/or the duration of their reaction times with which the reaction is made, in the form of at least one corresponding actuation signal, to a changed combustion state of the internal combustion engine (10),
**characterized**
**in that** in the individual decision levels (100-103) the actuation signals are generated by accessing information, in particular in the form of characteristic fields, predefined before the operation of the internal combustion engine (10), wherein the portion of the said information in the generation of the actuation signals increases as the monitoring time or reaction time of the decision levels (100-103) decreases, with the result that the portion of this information in the generation of the actuation signals for a decision level with a relatively short monitoring time or reaction time is greater than for a decision level with a relatively long monitoring time or reaction time,
wherein in one decision level (103) which has the longest monitoring time or reaction time, a diagnosis of the internal combustion engine (10) is carried out in order to record deviations caused by aging and wear by observing the behaviour of the internal combustion engine over a relatively long time period, and to correspondingly adjust the internal combustion engine (10) taking into account the changed process conditions.

2. Method according to Claim 1,
**characterized**
**in that** the combustion sequence within the internal combustion engine (10) is recorded by recording the cylinder pressure occurring in at least one cylinder (1) of the internal combustion engine (10).

3. Method according to Claim 2,
**characterized**
**in that** the combustion sequence within the internal combustion engine (10) is monitored and evaluated by recording, on a cylinder-specific basis, the cylinder pressure occurring in the individual cylinders (1) of the internal combustion engine (10).

4. Method according to one of the preceding claims,
**characterized**
**in that** in a first decision level (100), chronologically rapid open-loop or closed-loop control of the injection of a fuel into the internal combustion engine (10) is carried out.

5. Device for performing open-loop or closed-loop control of the behaviour of an internal combustion engine,
**characterized**
**in that** the device is configured to carry out all the steps of a method according to one of Claims 1-4.

## Revendications

1. Procédé destiné à commander ou à réguler le comportement d'un moteur à combustion,
lors duquel le cycle de la combustion à l'intérieur du moteur à combustion (10) est supervisé et évalué, et
lors duquel à l'aide du cycle de la combustion, des signaux de réglage destinés à influencer le comportement du moteur à combustion (10) sont délivrés,
les signaux de réglage destinés à influencer le comportement du moteur à combustion (10) étant délivrés dans différents plans de décisions (100 à 103), qui se différencient au niveau de la durée de leurs temps de supervision, au cours desquels la combustion du moteur à combustion (10) est supervisée avant qu'au moins un nouveau signal de réglage soit délivré et/ou de la durée de leurs temps de réaction, à l'aide desquels sous la forme d'au moins un signal de réglage correspondant, il soit réagi à un état de combustion modifié du moteur à combustion (10),
**caractérisé en ce que**
dans les plans de décision (100 à 103) individuels, les signaux de réglage sont délivrés par accès à des informations prédéfinies, notamment sous la forme de champs caractéristiques, avant le fonctionnement du moteur à combustion (10), la part de ces informations à la délivrance des signaux de réglage augmentant au fur et à mesure que le temps de supervision ou le temps de réaction des plans de décision (100 à 103) diminue, de sorte que, pour un plan de décision à temps de supervision ou temps de réaction plus court, la part desdites informations à la délivrance des signaux de réglage soit plus importante que pour un plan de décision avec un temps de supervision ou temps de réaction plus long,
dans un plan de décision (103) qui présente le temps de supervision ou temps de réaction le plus long, un diagnostic du moteur à combustion (10) étant réalisé, pour détecter par l'observation du comportement du moteur à combustion sur une période assez longue, des écarts dus au vieillissement et à l'usure et pour asservir en conséquence le moteur à combustion (10), sous considération des conditions de processus modifiées.

2. Procédé selon la revendication 1,
**caractérisé en ce que** le cycle de la combustion à l'intérieur du moteur à combustion (10) est détecté par détection de la pression du cylindre régnant dans au moins un cylindre (1) du moteur à combustion (10).

3. Procédé selon la revendication 2,
**caractérisé en ce que** le cycle de la combustion à l'intérieur du moteur à combustion (10) est supervisé et évalué par une détection individuelle par cylindre de la pression du cylindre régnant dans chacun des cylindres (1) du moteur à combustion (10).

4. Procédé selon l'une quelconque des revendications précédentes,
**caractérisé en ce que** dans un premier plan de décision (100), il est réalisé une commande ou régulation rapide dans le temps de l'injection d'un carburant dans le moteur à combustion (10).

5. Dispositif destiné à commander ou réguler le comportement d'un moteur à combustion,
**caractérisé en ce que**
le dispositif est agencé pour réaliser toutes les étapes d'un procédé selon l'une quelconque des revendications 1 à 4.
